# EUROPEAN PATENT SPECIFICATION

(11) **EP 4 606 558 B1**
(45) Date of publication and mention of the grant of the patent: **04.11.2026**
(21) Application number: 25155227.9
(22) Date of filing: 31.01.2025
(51) Int. Cl.: B29C 64/106, B29C 64/393, B29C 64/194, B29C 64/227, E04G 21/04, B28B 1/00, B33Y 10/00, B33Y 30/00, B33Y 80/00

(54) **ADDITIVE MANUFACTURING METHOD, THREE-DIMENSIONAL OBJECT OBTAINED THEREFROM, AND ADDITIVE MANUFACTURING SYSTEM**
VERFAHREN ZUR GENERATIVEN FERTIGUNG, DARAUS ERHALTENES DREIDIMENSIONALES OBJEKT UND SYSTEM ZUR GENERATIVEN FERTIGUNG
PROCÉDÉ DE FABRICATION ADDITIVE, OBJET TRIDIMENSIONNEL OBTENU À PARTIR DE CELUI-CI, ET SYSTÈME DE FABRICATION ADDITIVE

(30) Priority: 22.02.2024 FI 20245220
(43) Date of publication of application: 27.08.2025
(73) Proprietor: Hyperion Robotics Oy, 02630 Espoo (FI)
(72) Inventor: Unterreiner, Henry, 02630 Espoo (FI); Mohite, Ashish, 02630 Espoo (FI)
(74) Representative: TBK

(56) References cited:
- US-A1- 2017 225 445

## Description

### Field

The present disclosure relates to an additive manufacturing method, an additive manufacturing system, and a three-dimensional object obtained by executing the additive manufacturing method.

### Background

Additive manufacturing, also referred to as "AM", is the construction of a three-dimensional object according to a three-dimensional data model, also referred to as "3D model" or "CAD model". The basis of AM is layer-by-layer sequential massing, by which a material is deposited to form the three-dimensional object. Conventionally, AM is used for precise reproduction of a digital model designated for manufacturing, so amount and distribution of mass directly correspond to their digital counterparts.

However, AM technology implies that massing can be affected by how the material depositing device moves and how fast and where it discharges the material. The slower the material depositing device moves and discharges - the more matter it deposits, the faster - the less.

EP 3 587 077 A1 relates to an additive manufacturing system and a method where a speed at which material is passed to a head is controlled based on marks on the material surface. US 2017 225445 A1 discloses an additive manufacturing method for producing parts with curved surfaces.

US 10 350 821 B2 relates to a method for manufacturing a three-dimensional object by additive manufacturing where a relative movement between a substrate and a dispensing head is effected such that the dispensing head moves along a non-linear path.

However, conventionally, the path along which a material depositing device moves, has a predetermined distance from itself. By maintaining said predetermined distance of the toolpath from itself, excessive accumulation of the material in a locally concentrated area is prevented. However, maintaining said predetermined distance of the toolpath from itself creates specific requirements to the routing of the toolpath, which thereby restricts the freedom of design and decreases the efficiency of the additive manufacturing.

Therefore, it is an object of the present disclosure to efficiently and precisely manufacture a three-dimensional object by additive manufacturing, while allowing the toolpath of the material depositing device to be close to itself.

### Summary

The above object is solved by an additive manufacturing method according to claim 1.

The additive manufacturing method controls an additive manufacturing system for manufacturing a three-dimensional object from a curable first material according to a three-dimensional data model.

The curable first material may be a liquid or a high-viscose material that can be cured, hardened or set hard so as to form the three-dimensional object. Specifically, the curable first material may be a molten polymer material. The curable first material may also be a dispersion, in which particles of one or more solid materials are dispersed in a liquid or a high-viscose material.

The additive manufacturing system comprises a base for supporting the three-dimensional object thereon, a nozzle for discharging the first material, a moving mechanism configured to cause a relative movement between the base and the nozzle, and a controller configured to control the moving mechanism.

The base is a structure that supports the three-dimensional object thereon, such as a work surface, a pallet, a factory floor, a place of an end consumer, a construction site or the like.

The nozzle is a device, through which the first material is discharged and supplied towards the base. The nozzle is configured to set and control discharge characteristics of the first material, such as a discharge rate of the first material. The nozzle may have a predetermined opening area, through which the first material is discharged. The nozzle may be connected to a reservoir of the first material to ensure continuous supply of the first material when manufacturing the three-dimensional object. The nozzle may also be the nozzle of an extruder that melts a polymer material into a liquid or a high-viscose state by applying heat thereto, so as to set and control the discharge rate from the nozzle.

The moving mechanism causes a relative movement between the base and the nozzle by moving the base with respect to the nozzle and/or moving the nozzle with respect to the base. Specifically, the moving mechanism may be an industrial robot that has a manipulator arm, on which the nozzle is placed, and is capable of moving on three or more axes with respect to the base.

However, the moving mechanism is not limited to an industrial robot, and can also be a multi-axis positioning system, such as a three-axis positioning system that moves along an X-, Y-, and Z-axis, while the nozzle is placed in a fixed position. Furthermore, the moving mechanism may be a combined positioning system, in which the nozzle is moved along an X-, and Y-axis while the base is moved along the vertical direction (Z-axis), for example.

The controller is a commonly known microcomputer and may include a CPU, a RAM, a ROM, an input/output interface, and the like, and is configured to control the moving mechanism by transmitting respective output signals to servomotors, stepper motors, actuators or the like of the moving mechanism so as to cause the relative movement.

When the moving mechanism causes the relative movement, the nozzle follows a target trajectory. The target trajectory is a toolpath, along which a center of the nozzle moves relative to the base. The target trajectory represents a three-dimensional curve that is generated on the basis of the three-dimensional data model, such as the CAD model of the three-dimensional object.

The target trajectory includes a plurality of sections that are located in multiple vertically consecutive layers. Each section represents a part of the target trajectory, and may have a specific length along the target trajectory.

A specific layer of the multiple vertically consecutive layers may be identified by referring to a k^{th} layer, wherein "k" is a natural number, such that a k+1^{th} layer represents a layer that is immediately adjacent to the k^{th} layer in the vertical direction, a k+2^{th} layer represents a layer that is the next but one layer with respect to the k^{th} layer in the vertical direction, and so forth.

While following the target trajectory, a plurality of segments of the first material are discharged from the nozzle. Each of the segments is formed from the first material and occupies a volume in the three-dimensional space. Each segment has a thickness in a direction perpendicular to the target trajectory and within a respective layer, a height in a vertical direction, and a length along the target trajectory. All segments together form the three-dimensional object. A centerline of each of the segments coincides and aligns with a part of the target trajectory. Particularly, each centerline of the segments coincides and aligns with a respective section of the plurality of sections of the target trajectory.

The discharging from the nozzle in a specific section is controlled by setting a movement speed of the nozzle and/or a discharge rate of the nozzle in that specific section. The expression "and/or" means in this context that only the movement speed of the nozzle may be controlled, only the discharge rate of the nozzle may be controlled, or both may be controlled in conjunction while moving in a specific section. The movement speed of the nozzle is defined as a change of position of the nozzle along the target trajectory with respect to time. Specifically, a magnitude of the movement speed corresponds to a scalar, and may be specified in the distance travelled per time, such as meters per second [m/s], for example. The discharge rate of the first material is defined as an amount (such as a volume or a mass) of the first material that is discharged from the nozzle with respect to time. Specifically, the discharge rate of the first material may be specified in liters per minute [l/min] or grams per second [g/s], for example.

Specifically, a relatively high thickness of a segment is obtained by setting a relatively low movement speed and/or a relatively high discharge rate. Vice versa, a relatively low thickness of the segment is obtained by setting a relatively high movement speed and/or a relatively low discharge rate. Particularly, the movement speed and/or the discharge rate may be set on the basis of the discharge characteristics of the first material (such as the viscosity of the first material), thereby taking into account that a relatively low-viscous material flows apart easily after discharging and causes a relatively high thickness of the segment and a relatively low height thereof, and vice versa.

The magnitude of the movement speed does not have to be constant along an entire section. Specifically, a speed profile may be applied in a section, and the movement speed may vary (increase and/or decrease) while moving along said section. At each point of the target trajectory, a corresponding movement speed may be specified. Similarly, the discharge rate does not have to be constant along an entire section. Specifically, a discharge profile may be applied in a section, and the discharge rate may vary (increase and/or decrease) while moving along said section. At each point of the target trajectory, a corresponding discharge rate may be specified.

The additive manufacturing method comprises a first discharging step of moving the nozzle by the moving mechanism with a first movement speed in a first section of the target trajectory within an n^{th} layer of the multiple vertically consecutive layers, while discharging a first segment of the first material with a first discharge rate from the nozzle.

In the first discharging step, the first movement speed and/or the first discharge rate is set such that the first segment has a height in a vertical direction. Similarly, the first movement speed and/or the first discharge rate may be set such that the first segment has a thickness in a direction perpendicular to the target trajectory and within the n^{th} layer. The first movement speed and/or the first discharge rate may be constant along the first section, such that the height of the first segment is constant along the first section.

The additive manufacturing method further comprises a second discharging step of moving the nozzle by the moving mechanism with a second movement speed in a second section of the target trajectory within the n^{th} layer, while discharging a second segment of the first material with a second discharge rate from the nozzle. The second section is continuous to the first section along the target trajectory, such that the second discharging step is executed before or after the first discharging step. In the second discharging step, the second movement speed and/or the second discharge rate may be set such that the second segment has a thickness in a direction perpendicular to the target trajectory and within the n^{th} layer that is substantially equal to the thickness of the first segment.

The additive manufacturing method further comprises a third discharging step of moving the nozzle by the moving mechanism with a third movement speed in a third section of the target trajectory within a n+1^{th} layer of the multiple vertically consecutive layers, while discharging a third segment of the first material with a third discharge rate from the nozzle. Despite being located in different layers, the third section may be continuous to the second section along the target trajectory, such that the third discharging step is executed before or after the second discharging step. However, also other steps may be executed between the second and third discharging step. In the third discharging step, the third movement speed and/or the third discharge rate may be set such that the third segment has a thickness in a direction perpendicular to the target trajectory and within the n+1^{th} layer that is substantially equal to the thickness of the first segment.

In the third discharging step, the nozzle is moved such that the third section is close to the second section and a vertical distance between the third section and the second section at a first vertically overlapping part is less than the height of the first segment. The first vertically overlapping part may be a part where the vertical distance between the second section and the third section is the smallest. Specifically, the first vertically overlapping part may be located on a vertical line intersecting the second section and the third section. At least one of a magnitude of the second movement speed and a magnitude of the third movement speed is higher than a magnitude of the first movement speed and/or at least one of the second discharge rate and the third discharge rate is lower than the first discharge rate. Specifically, in case the magnitude of the second movement speed varies along the second section, such as in case a speed profile is applied in the second section, the magnitude of the second movement speed may be represented by the magnitude of the second movement speed at the first vertically overlapping part. In this case, the magnitude of the second movement speed may be represented by the magnitude of the movement speed in a point of the target trajectory, in which the second section is intersected by the vertical line. Similarly, in case the magnitude of the third movement speed varies along the third section, such as in case a speed profile is applied in the third section, the magnitude of the third movement speed may be represented by the magnitude of the third movement speed at the first vertically overlapping part. In this case, the magnitude of the third movement speed may be represented by the magnitude of the movement speed in a point of the target trajectory, in which the third section is intersected by the vertical line. The same applies for a case, in which a discharge profile is applied.

Accordingly, by setting at least one of a magnitude of the second movement speed and a magnitude of the third movement speed appropriately, excessive discharge of the first material is prevented in an area, where the third section is close to the second section and the vertical distance between the second section and the third section is less than the height of the first segment. Thereby, structural inaccuracies, in which the shape of the three-dimensional object deviates from that of the three-dimensional data model, are prevented. The same effect is achieved by setting at least one of the second discharge rate and the third discharge rate appropriately.

Preferably, each of the first discharge rate, the second discharge rate, and the third discharge rate is greater than zero, and each of the magnitude of the first movement speed, the magnitude of the second movement speed, and the magnitude of the third movement speed is greater than zero.

Accordingly, the excessive discharge of the first material is prevented in the area, where the third section is close to the second section, without stopping the discharging from the nozzle and without stopping the movement of the moving mechanism. Thereby, the three-dimensional object can be manufactured quickly and efficiently. Furthermore, the three-dimensional object can be manufactured even with a first material, whose discharge characteristics prevent the discharging from the nozzle to be easily and precisely stopped.

Preferably, in the additive manufacturing method, the second section is a non-planar part of the target trajectory, such that, in the second discharging step, the nozzle is moved in a horizontal direction while moving in the vertical direction, and the third section is a non-planar part of the target trajectory, such that, in the third discharging step, the nozzle is moved in a horizontal direction while moving in the vertical direction. In other words, the non-planar part of the target trajectory is a part of the target trajectory, which extends across the X-, Y-, and Z-axes. That is, a respective layer of the multiple vertically consecutive layers, which includes the non-planar part, is a non-planar layer that extends across the X-, Y-, and Z-axes. In this case, the n^{th} layer and the n+1^{th} layer are non-planar layers that extend across the X-, Y-, and Z-axes.

Accordingly, by moving the nozzle along the non-planar parts of the target trajectory in the second section and the third section, the second segment and the third segment can be formed in a non-planar manner, such as closely along non-planar surfaces like non-planar profiles of rigid objects. Thereby, a smooth transition between the non-planar surface and the segments of the three-dimensional object can be ensured, such that a precisely-formed structure is obtained.

Preferably, in the additive manufacturing method, the second section and the third section each have an arc shape, a curvature of the arc shape of the second section is different from a curvature of the arc shape of the third section, and a length of the second section is different from a length of the third section. Specifically, the curvature of the arc shape of the second section may be larger than the curvature of the arc shape of the third section, and the length of the second section may be longer than the length of the third section.

Accordingly, by moving the nozzle along arc shaped parts of the target trajectory, the second segment and the third segment can be formed closely along circular or elliptical surfaces, such as circular or elliptical profiles of rigid objects. Specifically, by moving the nozzle along a curvature of the arc shape of the third section that is different from a curvature of the arc shape of the second section, a difference in vertical height in a part of the three-dimensional object can be divided in a change of the vertical height of the second segment and a change of the vertical height of the third segment. That is, a difference in vertical height in a part of the three-dimensional object can be split into different segments of different layers. Thereby, gradual transitions with respect to the vertical height of the three-dimensional object can be accomplished, and abrupt changes of the vertical height of the segments within their respective layers are prevented.

Preferably, in the additive manufacturing method, in an n-1^{th} layer of the multiple vertically consecutive layers, the nozzle is moved such that a magnitude of a movement speed at the first vertically overlapping part is lower than the magnitude of the second movement speed, and the magnitude of the second movement speed at the first vertically overlapping part is lower than the magnitude of the third movement speed. Specifically, in the n-1^{th} layer, the nozzle may be moved along non-planar parts of the target trajectory. These non-planar parts may be located at the first vertically overlapping part. Furthermore, these non-planar parts may be arc shaped parts of the target trajectory within the n-1^{th} layer. Specifically, a curvature of the arc shape of these non-planar parts may be larger than the curvature of the arc shape of the second section, and the length of these non-planar parts may be longer than the length of the second section. Similarly, non-planar parts with increasing curvatures may be provided in an n-2^{th} layer, an n-3^{th} layer, and so forth. A layer located below these non-planar layers may have a planar section at the first vertically overlapping part.

Accordingly, a difference in vertical height in a part of the three-dimensional object can be compensated by multiple different segments of multiple different layers. Thereby, a difference in vertical height between a planar surface and a non-planar surface can be made gradual, and abrupt changes of the vertical height of the segments within their respective layers are prevented.

Preferably, in the second discharging step, the nozzle is moved along the second section with a non-linear speed profile, whose magnitude increases from the magnitude of the first movement speed to have the magnitude of the second movement speed at the first vertically overlapping part and then decreases to the magnitude of the first movement speed in a non-linear manner. Preferably, in the third discharging step, the nozzle is moved along the third section with a non-linear speed profile, whose magnitude increases from the magnitude of the first movement speed to have the magnitude of the third movement speed at the first vertically overlapping part and then decreases to the magnitude of the first movement speed in a non-linear manner. Preferably, the magnitude of the second movement speed is different from the magnitude of the third movement speed.

Accordingly, by using the non-linear speed profiles, the second segment and the third segment can be formed to change smoothly along the second and third section, without changing the discharge rates from the nozzle along the second and third section, respectively. Specifically, the height of the second segment and the height of the third segment can be formed to change smoothly along the second and third section. This allows discharging the second segment and the third segment closely around non-planar surfaces. Specifically, by setting the magnitude of the second movement speed to be different from the magnitude of the third movement speed, the height of the second segment can be formed to be different from the height of the third segment at the first vertically overlapping part. This allows to create a gradual transition between the height of the segments of vertically consecutive layers at the first vertically overlapping part.

Preferably, the additive manufacturing method further comprises a second passage forming step of placing a second passage forming object in a n+2^{th} layer of the multiple vertically consecutive layers, such that the second passage forming object overlaps with at least a part of the second segment and at least a part of the third segment in the vertical direction at the first vertically overlapping part. The second passage forming object may be placed on the third segment. The second passage forming object permits passage of a fluid and/or a rigid object in a direction intersecting the third segment. Specifically, the second passage forming object may allow guiding the rigid object from one lateral side of the three-dimensional object through the three-dimensional object to the other lateral side of the three-dimensional object. The second passage forming object has a first non-planar profile along at least a part of the third segment. Specifically, the second passage forming object may have an arc shape (arc shaped profile) along at least a part of the third segment as the non-planar profile. The arc shape may be a part of a circular or elliptical cross-section of the second passage forming object. In the second discharging step and the third discharging step, each of the second movement speed and the third movement speed is set to correspond to the first non-planar profile of the second passage forming object so as to complement a vertical height of the second passage forming object at the first vertically overlapping part. Specifically, as the first non-planar profile of the second passage forming object increases in vertical height along the part of the third segment, the second movement speed and the third movement speed may be increased such that the second segment and the third segment decrease in vertical height, and vice versa. The vertical height may be complemented entirely, that is, the vertical height of the second segment and the vertical height of the third segment at the vertically overlapping part may be equal to the vertical height of the second passage forming object at the vertically overlapping part. The vertical height may also be complemented partially, that is, the vertical height of the second segment and the vertical height of the third segment at the vertically overlapping part may be smaller than the vertical height of the second passage forming object at the vertically overlapping part.

Accordingly, a three-dimensional object can be manufactured, in which a second passage forming object having a first non-planar profile is closely surrounded by the first material, while the transition between the vertical height of the segments at the first vertically overlapping part is kept gradual.

Preferably, the additive manufacturing method further comprises a fourth discharging step of moving the nozzle by the moving mechanism with a fourth movement speed in a fourth section of the target trajectory within the n^{th} layer, while discharging a fourth segment of the first material with a fourth discharge rate from the nozzle. Preferably, the additive manufacturing method further comprises a fifth discharging step of moving the nozzle by the moving mechanism with a fifth movement speed in a fifth section of the target trajectory within the n+1^{th} layer, while discharging a fifth segment of the first material with a fifth discharge rate from the nozzle. In the fifth discharging step, the nozzle is moved such that the fifth section is close to the fourth section and a vertical distance between the fourth section and the fifth section at a second vertically overlapping part is less than the height of the first segment. The second vertically overlapping part may be a part where the vertical distance between the fourth section and the fifth section is the smallest. Specifically, the second vertically overlapping part may be located on a vertical line intersecting the fourth section and the fifth section. At least one of a magnitude of the fourth movement speed and a magnitude of the fifth movement speed is higher than a magnitude of the first movement speed and/or at least one of the fourth discharge rate and the fifth discharge rate is lower than the first discharge rate. Specifically, in case the magnitude of the fourth movement speed varies along the fourth section, such as in case a speed profile is applied in the fourth section, the magnitude of the fourth movement speed may be represented by the magnitude of the fourth movement speed at the second vertically overlapping part. In this case, the magnitude of the fourth movement speed may be represented by the magnitude of the movement speed in a point of the target trajectory, in which the fourth section is intersected by the vertical line. Similarly, in case the magnitude of the fifth movement speed varies along the fifth section, such as in case a speed profile is applied in the fifth section, the magnitude of the fifth movement speed may be represented by the magnitude of the fifth movement speed at the second vertically overlapping part. In this case, the magnitude of the fifth movement speed may be represented by the magnitude of the movement speed in a point of the target trajectory, in which the fifth section is intersected by the vertical line. The same applies for a case, in which a discharge profile is applied. Furthermore, a length of the fourth section is different from a length of the second section, and a length of the fifth section is different from a length of the third section. Specifically, a length of the fourth section may be longer than a length of the second section, and a length of the fifth section may be longer than a length of the third section.

Accordingly, by setting at least one of the magnitude of the fourth movement speed and the magnitude of the fifth movement speed appropriately, excessive discharge of the first material is prevented in an area, where the fifth section is close to the fourth section and the vertical distance between the fourth section and the fifth section is less than the height of the first segment. Thereby, structural inaccuracies, in which the shape of the three-dimensional object deviates from that of the three-dimensional data model, are prevented. The same effect is achieved by setting at least one of the fourth discharge rate and the fifth discharge rate appropriately. Furthermore, by moving the nozzle such that the length of the fourth section is different from the length of the second section, and the length of the fifth section is different from the length of the third section, a structure around the second vertically overlapping part may be formed to be different from a structure around the first vertically overlapping part.

Preferably, the additive manufacturing method further comprises a third passage forming step of placing a third passage forming object in the n+2^{th} layer of the multiple vertically consecutive layers, such that the third passage forming object overlaps with at least a part of the fourth segment and at least a part of the fifth segment in the vertical direction at the second vertically overlapping part. The third passage forming object may be placed on the fifth segment. The third passage forming object permits passage of the fluid and/or the rigid object in a direction intersecting the fifth segment. Specifically, the third passage forming object may allow guiding the rigid object from one lateral side of the three-dimensional object through the three-dimensional object to the other lateral side of the three-dimensional object. The third passage forming object has a second non-planar profile along at least a part of the fifth segment that is different from the first non-planar profile. Specifically, the third passage forming object may have an arc shape (arc shaped profile) along at least a part of the fifth segment as the non-planar profile. The arc shape may be a part of a circular or elliptical cross-section of the third passage forming object. In the fourth discharging step and the fifth discharging step, each of the fourth movement speed and the fifth movement speed is set to correspond to the second non-planar profile of the third passage forming object so as to complement a vertical height of the third passage forming object at the second vertically overlapping part. Specifically, as the second non-planar profile of the third passage forming object increases in vertical height along the part of the fifth segment, the fourth movement speed and the fifth movement speed may be increased such that the fourth segment and the fifth segment decrease in vertical height, and vice versa. The vertical height may be complemented entirely, that is, the vertical height of the fourth segment and the vertical height of the fifth segment at the second vertically overlapping part may be equal to the vertical height of the third passage forming object at the second vertically overlapping part. The vertical height may also be complemented partially, that is, the vertical height of the fourth segment and the vertical height of the fifth segment at the second vertically overlapping part may be smaller than the vertical height of the third passage forming object at the second vertically overlapping part.

Accordingly, a three-dimensional object can be manufactured, in which a third passage forming object having a second non-planar profile that is different from the first non-planar profile is closely surrounded by the first material, while the transition between the vertical height of the segments at the second vertically overlapping part is kept gradual.

Preferably, in the additive manufacturing method, the first material is liquid curable concrete. The liquid curable concrete cures over time by concrete hydration, after being discharged from the nozzle, obtaining a certain rigidity and thereby forming the three-dimensional object.

Accordingly, an efficient and precise additive manufacturing method for liquid concrete is provided. Specifically, even if the liquid concrete may prevent the discharging from the nozzle to be easily and precisely changed, an appropriate additive manufacturing method is provided for liquid concrete, and the three-dimensional object can be manufactured efficiently.

The above object is further solved by an additive manufacturing system according to claim 11, and a three-dimensional object according to claim 12 obtained by executing the additive manufacturing method. The additive manufacturing system is configured to execute the steps of the above additive manufacturing method. The three-dimensional object is a product obtained from the steps of the above additive manufacturing method.

### Brief description of drawings

The aspects of the disclosure may be best understood from the following detailed description taken in conjunction with the accompanying figures. The figures are schematic and simplified for clarity, and they just show details to improve the understanding of the claims, while other details are left out. The scope of the invention is defined by the appended claims.
Fig. 1 is a perspective view of a part of a target trajectory, along which a nozzle of an additive manufacturing system is moved to manufacture a three-dimensional object according to an embodiment;
Fig. 2 is a side view of a part of the three-dimensional object according to the embodiment;
Fig. 3 is a plan view of the three-dimensional object according to the embodiment;
Fig. 4A is a perspective view illustrating a part of the target trajectory, along which the nozzle of the additive manufacturing system is moved, and a third passage forming object;
Fig. 4B is an exploded view of the part of the target trajectory and the third passage forming object shown in Fig. 4A;
Fig. 5A is a side view illustrating a part of the target trajectory, along which the nozzle of the additive manufacturing system is moved to manufacture a part of the three-dimensional object around a second passage forming object;
Fig. 5B is a side view illustrating a part of the target trajectory, along which the nozzle of the additive manufacturing system is moved to manufacture a part of the three-dimensional object around the third passage forming object; and
Fig. 6 is a flowchart illustrating the additive manufacturing method according to the embodiment.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details, the scope of the invention being defined by the appended claims.

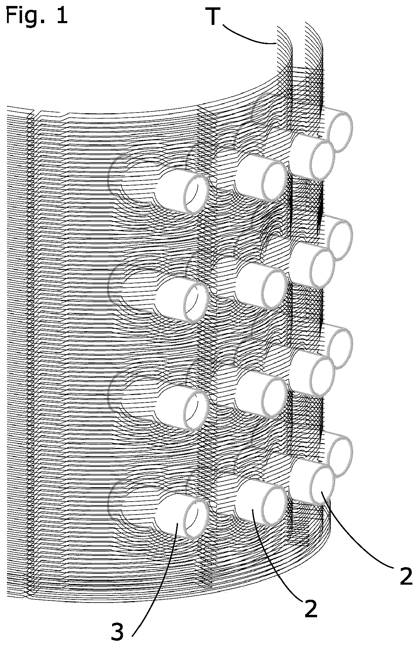

Fig. 1 is a perspective view of a part of a target trajectory T, along which a nozzle of an additive manufacturing system is moved to manufacture a three-dimensional object according to an embodiment.

In the embodiment, the three-dimensional object is a draw pit. The draw pit is designed to accommodate electrical cabling, wiring boxes, water and/or sewage piping, valves, connectors and the like, and to provide easy access thereto in order to facilitate the ducting, initial installation, maintenance and monitoring thereof. In the embodiment, the draw pit is manufactured from concrete (the first material).

In the embodiment, the draw pit has a side wall having a substantially cylindrical shape, and an upper access opening provided on an upper side of the draw pit. However, draw pits having shapes other than the cylindrical shape, such as a parallelepiped shape or a cubical shape, may be manufactured.

The draw pit further comprises a plurality of side openings, through which the electrical cabling, water and/or sewage piping or the like can be guided so as to lead from an inside of the draw pit through the side wall to an outside of the draw pit. In the embodiment, the side openings of the draw pit are provided by a second passage forming object 2 and a third passage forming object 3, as shown in Fig. 1. In the embodiment, the second passage forming object 2 and the third passage forming object 3 are cylindrical pipes penetrating the side wall of the draw pit.

In the embodiment, the draw pit is manufactured by executing an additive manufacturing method with an additive manufacturing system. The additive manufacturing system (not shown) comprises a base for supporting the draw pit thereon, a nozzle for discharging the liquid concrete, an industrial robot configured to cause a relative movement between the base and the nozzle, and a controller configured to control the industrial robot.

When the industrial robot causes the relative movement between the base and the nozzle, the nozzle follows the target trajectory T, also referred to as a toolpath. Fig. 1 shows a part of the target trajectory T, which represents half of the cylindrical side wall of the draw pit. As shown in Fig. 1, the target trajectory T includes a plurality of sections that are located in multiple vertically consecutive layers.

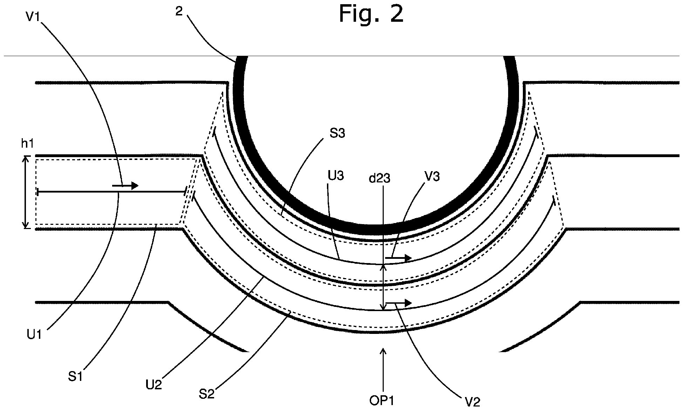

Fig. 2 is a side view of a part of the draw pit according to the embodiment. Specifically, Fig. 2 shows a part of the cylindrical side wall of the draw pit that corresponds to the part of the target trajectory T shown in Fig. 1. The second passage forming object 2 has a circular cross-section in the side view, and is surrounded by a plurality of segments of concrete that are arranged on multiple vertically consecutive layers. Specifically, a first segment S1, a second segment S2, which is continuous to the first segment S1 and arranged in the same layer as the first segment S1, and a third segment S3, which is arranged in a layer that is adjacent to that of the second segment S2 in the vertical direction, are provided in the draw pit.

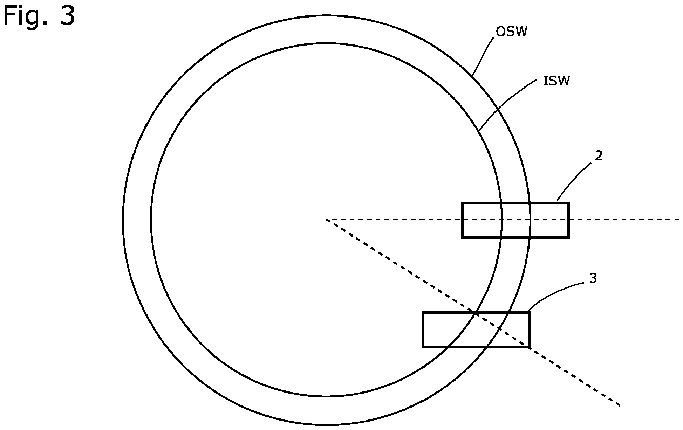

Fig. 3 is a plan view of the draw pit according to the embodiment. Fig. 3 shows two circular portions, which are arranged concentrically around a center (cylinder axis) of the draw pit on different diameters. The two circular portions together form a part of the side wall of the draw pit.

A first of the two circular portions, which has a larger diameter around the center, represents a part of an outer side wall OSW of the draw pit. The second of the two circular portions, which has a smaller diameter around the center, represents a part of an inner side wall ISW of the draw pit. In other words, the side wall of the draw pit has a double-wall structure comprising the inner side wall ISW and the outer side wall OSW. The inner side wall ISW and the outer side wall OSW may be connected by at least one stiffener portion (not shown). A hollow portion may be formed between the inner side wall ISW and the outer side wall OSW.

As shown in Fig. 3, the second passage forming object 2 is arranged to penetrate each of the inner side wall ISW and the outer side wall OSW in a radial direction thereof. Specifically, the second passage forming object 2 is aligned with the radial direction of the cylindrical side wall of the draw pit such that a longitudinal axis of the second passage forming object 2 is parallel to the radial direction of the cylindrical side wall of the draw pit. The third passage forming object 3 is arranged to penetrate each of the inner side wall ISW and the outer side wall OSW in direction that intersects the radial direction of the cylindrical side wall of the draw pit. Specifically, as shown in Fig. 3, the third passage forming object 3 is aligned with the second passage forming object 2 such that a longitudinal axis of the third passage forming object 3 is parallel to the longitudinal axis of the second passage forming object 2.

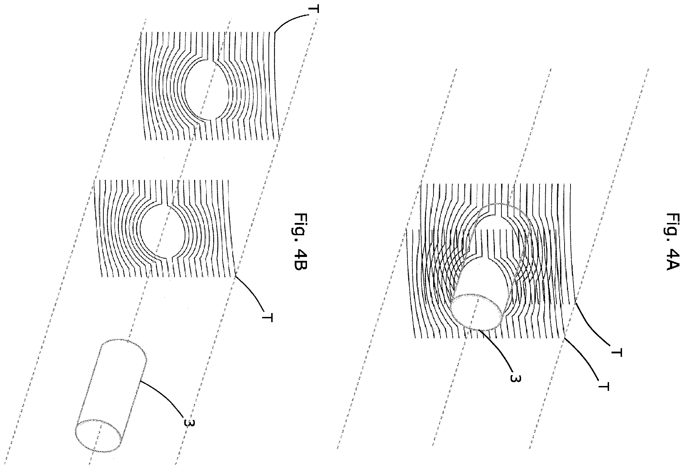

Fig. 4A is a perspective view illustrating a part of the target trajectory T, along which the nozzle of the additive manufacturing system is moved to manufacture a part of the draw pit around the third passage forming object 3.

Fig. 4B is an exploded view of the part of the target trajectory T and the third passage forming object 3 shown in Fig. 4A.

Returning to Fig. 2, a part of the cylindrical side wall of the draw pit is manufactured by moving the nozzle by the industrial robot with a first movement speed V1 in a first section U1 of the target trajectory T within an n^{th} layer of the multiple vertically consecutive layers, while discharging a first segment S1 of the liquid concrete with a first discharge rate from the nozzle.

As shown in Fig. 2, the first segment S1 has a height h1 in a vertical direction and within the n^{th} layer, and a length along the first section U1 of target trajectory T. In the embodiment, the first section U1 is a planar part of the target trajectory T. The first movement speed V1 is substantially constant along the first section U1, and the first discharge rate is substantially constant along the first section U1. Accordingly, the height h1 is substantially constant along the first section U1.

The nozzle is then moved by the industrial robot with a second movement speed V2 in a second section U2 of the target trajectory T within the n^{th} layer, wherein the second section U2 is continuous to the first section U1 along the target trajectory T, while discharging a second segment S2 of the liquid concrete with a second discharge rate from the nozzle. As shown in Fig. 2, the second section U2 is a non-planar part of the target trajectory T. In the embodiment, the second movement speed V2 is higher than the first movement speed V1, and the second discharge rate is equal to the first discharge rate. Accordingly, a vertical height of the second segment U2, where the nozzle is moved with the second movement speed V2, is lower than the height h1 of the first segment S1. In the embodiment, a non-linear speed profile is applied along the second section U2, whose magnitude increases from the magnitude of the first movement speed V1 to have the magnitude of the second movement speed V2 at the first vertically overlapping part OP1 and then decreases to the magnitude of the first movement speed V1 in a non-linear manner. The second discharge rate is constant along the second section U2.

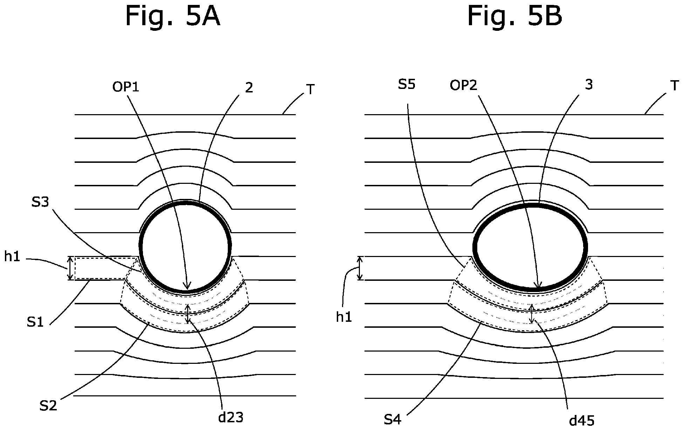

Fig. 5A is a side view illustrating a part of the target trajectory T, along which the nozzle of the additive manufacturing system is moved to manufacture a part of the draw pit around the second passage forming object 2 by discharging the second segment S2.

Subsequently, the nozzle is moved further along the target trajectory T so as to form a subsequent part of the side wall of the draw pit within the n^{th} layer.

Subsequently, the nozzle is moved by the industrial robot with a fourth movement speed V4 in a fourth section U4 of the target trajectory T within the n^{th} layer, while discharging a fourth segment S4 of the liquid concrete with a fourth discharge rate from the nozzle. The fourth segment S4 is shown in Fig. 5B, which is a side view illustrating a part of the target trajectory T, along which the nozzle of the additive manufacturing system is moved to manufacture a part of the draw pit around the third passage forming object 3. As shown in Fig. 5B, the fourth section U4 is a non-planar part of the target trajectory T. In the embodiment, a non-linear speed profile is applied along the fourth section U4, whose magnitude increases from the magnitude of the first movement speed V1 to have the magnitude of the fourth movement speed V4 at the second vertically overlapping part OP2 and then decreases to the magnitude of the first movement speed V1 in a non-linear manner. The fourth discharge rate is constant along the fourth section U4.

Subsequently, the nozzle is moved further along the target trajectory T within the n^{th} layer so as to form subsequent parts of the draw pit within the n^{th} layer.

Then, the nozzle is moved by the industrial robot to continue discharging the liquid concrete in the n+1^{th} layer.

In the n+1^{th} layer, the nozzle is moved by the industrial robot with a third movement speed V3 in a third section U3 of the target trajectory T, while discharging a third segment S3 of the liquid concrete with a third discharge rate from the nozzle. As shown in Fig. 2, the third section U3 is a non-planar part of the target trajectory T. Thereby, the nozzle is moved such that the third section U3 is close to the second section U2 and a vertical distance d23 between the third section U3 and the second section U2 at a first vertically overlapping part OP1 is less than the height h1 of the first segment S1, as shown in Figs. 2 and 5A. In the embodiment, the third movement speed V3 is higher than the first movement speed V1, and the third discharge rate is equal to the first discharge rate. In the embodiment, a non-linear speed profile is applied along the third section U3, whose magnitude increases from the magnitude of the first movement speed V1 to have the magnitude of the third movement speed V3 at the first vertically overlapping part **OP1** and then decreases to the magnitude of the first movement speed V1 in a non-linear manner.

The third discharge rate is constant along the third section U3.

Subsequently, the nozzle is moved by the industrial robot with a fifth movement speed V5 in a fifth section U5 of the target trajectory T within the n+1^{th} layer, while discharging a fifth segment S5 of the liquid concrete with a fifth discharge rate from the nozzle. As shown in Fig. 5B, the fifth section U5 is a non-planar part of the target trajectory T. Thereby, the nozzle is moved such that the fifth section U5 is close to the fourth section U4 and a vertical distance d45 between the fourth section U4 and the fifth section U5 at a second vertically overlapping part OP2 is less than the height h1 of the first segment S1, as shown in Fig. 5B. In the embodiment, each of a magnitude of the fourth movement speed V4 and a magnitude of the fifth movement speed V5 is higher than the magnitude of the first movement speed V1, and the fourth discharge rate and the fifth discharge rate are equal to the first discharge rate. In the embodiment, a non-linear speed profile is applied along the fifth section U5, whose magnitude increases from the magnitude of the first movement speed V1 to have the magnitude of the fifth movement speed V5 at the second vertically overlapping part OP2 and then decreases to the magnitude of the first movement speed V1 in a non-linear manner. The fifth discharge rate is constant along the fifth section U5.

Furthermore, as shown in Figs. 5A and 5B, a length of the fourth section U4 is different from a length of the second section U2, and a length of the fifth section U5 is different from a length of the third section U3. In the embodiment, the length of the fourth section U4 is longer than the length of the second section U2, and the length of the fifth section U5 is longer than the length of the third section U3. Specifically, a curvature of the fourth section U4 with respect to the vertical direction is different from a curvature of the second section U2 with respect to the vertical direction, and a curvature of the fifth section U5 with respect to the vertical direction is different from a curvature of the third section U3 with respect to the vertical direction.

Subsequently, the nozzle is moved further along the target trajectory T so as to form subsequent parts of the draw pit within the n+1^{th} layer.

Then, the additive manufacturing is continued in the n+2^{th} layer.

In the n+2^{th} layer, the second passage forming object 2 is placed on the third segment S3, as shown in Figs. 2 and 5A, such that the second passage forming object 2 overlaps with at least a part of the second segment S2 and at least a part of the third segment S3 in the vertical direction at the first vertically overlapping part OP1. The second passage forming object 2 is a pipe that permits guiding the electrical cabling, water and/or sewage piping or the like through the side wall of the draw pit.

As shown in Figs. 2 and 5A, the second passage forming object 2 has a first non-planar profile along at least a part of the third segment S3. The first non-planar profile resembles a part of a circular cross-section of the second passage forming object 2.

In the embodiment, each of the second movement speed V2 and the third movement speed V3 are set to correspond to the first non-planar profile of the second passage forming object 2 so as to complement a vertical height of the second passage forming object 2 at the first vertically overlapping part OP1, as shown in Figs. 2 and 5A.

In the n+2^{th} layer, the third passage forming object 3 is placed on the fifth segment S5, as shown in Fig. 5B, such that the third passage forming object 3 overlaps with at least a part of the fourth segment S4 and at least a part of the fifth segment S5 in the vertical direction at the second vertically overlapping part OP2. The third passage forming object 3 is a pipe that permits guiding the electrical cabling, water and/or sewage piping or the like through the side wall of the draw pit. As shown in Fig. 3, the third passage forming object 3 penetrates the side wall of the draw pit at a different angle than the second passage forming object 2 does.

As shown in Fig. 5B, the third passage forming object 3 has an a second non-planar profile along at least a part of the fifth segment S5 that is different from the first non-planar profile of the second passage forming object 2 shown in Fig. 5A. Based on the penetration angle with respect to the side wall of the draw pit, the second non-planar profile resembles a part of an elliptical cross-section of the third passage forming object 3.

In the embodiment, each of the fourth movement speed V4 and the fifth movement speed V5 is set to correspond to the second non-planar profile of the third passage forming object 3 so as to complement a vertical height of the third passage forming object 3 at the second vertically overlapping part OP2, as shown in Fig. 5B.

Subsequently, the nozzle is moved further along the target trajectory T so as to form subsequent parts of the draw pit. Specifically, the discharging of the segments of the liquid concrete in the layers above the n+1^{th} layer may be performed in a similar manner as the discharging of the segments of the liquid concrete in the n^{th} layer and the n+1^{th} layer, as shown in Figs. 5A and 5B.

Then, after completing the discharging of the liquid concrete from the nozzle, the liquid concrete is cured by concrete hydration. Thereby, the segments harden and the draw pit according to the embodiment is completed.

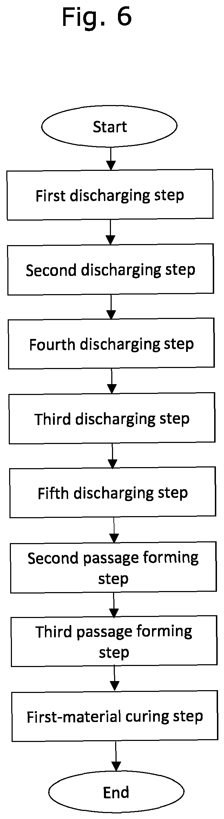

The above steps for manufacturing the draw pit are also shown in the flow chart of Fig. 6.

The particular features, structures or characteristics described in the embodiment do not all have to be present in the additive manufacturing system and the additive manufacturing method, and particular features may be omitted. The previous description is provided to enable any person skilled in the art to practice the various aspects described herein. Various modifications to the embodiment will be readily apparent to those skilled in the art, and the scope of the invention is defined by the appended **claims.**

## Claims

1. An additive manufacturing method for controlling an additive manufacturing system for manufacturing a three-dimensional object from a curable first material according to a three-dimensional data model,
the additive manufacturing system comprising:
a base for supporting the three-dimensional object thereon;
a nozzle for discharging the first material; and
a moving mechanism configured to cause a relative movement between the base and the nozzle, such that the nozzle follows a target trajectory (T), while discharging a plurality of segments (S1 to S5) of the first material from the nozzle, thereby manufacturing the three-dimensional object in multiple vertically consecutive layers,
the method comprising:
a first discharging step of moving the nozzle by the moving mechanism with a first movement speed (V1) in a first section (U1) of the target trajectory (T) within a n^{th} layer of the multiple vertically consecutive layers, while discharging a first segment (S1) of the first material with a first discharge rate from the nozzle;
a second discharging step of moving the nozzle by the moving mechanism with a second movement speed (V2) in a second section (U2) of the target trajectory (T) within the n^{th} layer, wherein the second section (U2) is continuous to the first section (U1) along the target trajectory (T), while discharging a second segment (S2) of the first material with a second discharge rate from the nozzle; and
a third discharging step of moving the nozzle by the moving mechanism with a third movement speed (V3) in a third section (U3) of the target trajectory (T) within a n+1^{th} layer of the multiple vertically consecutive layers, while discharging a third segment (S3) of the first material with a third discharge rate from the nozzle, **characterized in that**
in the first discharging step, the first movement speed (V1) and/or the first discharge rate is set such that the first segment (S1) has a height (h1) in a vertical direction,
in the third discharging step, the nozzle is moved such that the third section (U3) is close to the second section (U2) and a vertical distance (d23) between the third section (U3) and the second section (U2) at a first vertically overlapping part (OP1) is less than the height (h1) of the first segment (S1), and
at least one of a magnitude of the second movement speed (V2) and a magnitude of the third movement speed (V3) is higher than a magnitude of the first movement speed (V1) and/or at least one of the second discharge rate and the third discharge rate is lower than the first discharge rate.

2. The additive manufacturing method according to claim 1, wherein
each of the first discharge rate, the second discharge rate, and the third discharge rate is greater than zero, and
each of the magnitude of the first movement speed (V1), the magnitude of the second movement speed (V2), and the magnitude of the third movement speed (V3) is greater than zero.

3. The additive manufacturing method according to claim 1 or 2, wherein
the second section (U2) is a non-planar part of the target trajectory (T), such that, in the second discharging step, the nozzle is moved in a horizontal direction while moving in the vertical direction, and
the third section (U3) is a non-planar part of the target trajectory (T), such that, in the third discharging step, the nozzle is moved in a horizontal direction while moving in the vertical direction.

4. The additive manufacturing method according to claim 3, wherein the second section (U2) and the third section (U3) each have an arc shape, a curvature of the arc shape of the second section (U2) is different from a curvature of the arc shape of the third section (U3), and a length of the second section (U2) is different from a length of the third section (U3).

5. The additive manufacturing method according to claim 3 or 4, wherein,
in an n-1^{th} layer of the multiple vertically consecutive layers, the nozzle is moved such that a magnitude of a movement speed at the first vertically overlapping part (OP1) is lower than the magnitude of the second movement speed (V2), and
the magnitude of the second movement speed (V2) at the first vertically overlapping part (OP1) is lower than the magnitude of the third movement speed (V3).

6. The additive manufacturing method according to any one of claims 1 to 5, wherein
in the second discharging step, the nozzle is moved along the second section (U2) with a non-linear speed profile, whose magnitude increases from the magnitude of the first movement speed (V1) to have the magnitude of the second movement speed (V2) at the first vertically overlapping part (OP1) and then decreases to the magnitude of the first movement speed (V1) in a non-linear manner,
in the third discharging step, the nozzle is moved along the third section (U3) with a non-linear speed profile, whose magnitude increases from the magnitude of the first movement speed (V1) to have the magnitude of the third movement speed (V3) at the first vertically overlapping part (OP1) and then decreases to the magnitude of the first movement speed (V1) in a non-linear manner, and
the magnitude of the second movement speed (V2) is different from the magnitude of the third movement speed (V3).

7. The additive manufacturing method according to any one of claims 1 to 6, further comprising:
a second passage forming step of placing a second passage forming object (2) in a n+2^{th} layer of the multiple vertically consecutive layers, such that the second passage forming object (2) overlaps with at least a part of the second segment (S2) and at least a part of the third segment (S3) in the vertical direction at the first vertically overlapping part (OP1), wherein
the second passage forming object (2) permits passage of a fluid and/or a rigid object in a direction intersecting the third segment (S3), the second passage forming object (2) has a first non-planar profile along at least a part of the third segment (S3), and
the second movement speed (V2) and the third movement speed (V3) each correspond to the first non-planar profile of the second passage forming object (2) so as to complement a vertical height of the second passage forming object (2) at the first vertically overlapping part (OP1).

8. The additive manufacturing method according to any one of claims 1 to 7, further comprising:
a fourth discharging step of moving the nozzle by the moving mechanism with a fourth movement speed (V4) in a fourth section (U4) of the target trajectory (T) within the n^{th} layer, while discharging a fourth segment (S4) of the first material with a fourth discharge rate from the nozzle; and
a fifth discharging step of moving the nozzle by the moving mechanism with a fifth movement speed (V5) in a fifth section (U5) of the target trajectory (T) within the n+1^{th} layer, while discharging a fifth segment (S5) of the first material with a fifth discharge rate from the nozzle, wherein
in the fifth discharging step, the nozzle is moved such that the fifth section (U5) is close to the fourth section (U4) and a vertical distance (d45) between the fourth section (U4) and the fifth section (U5) at a second vertically overlapping part (OP2) is less than the height (h1) of the first segment (S1),
at least one of a magnitude of the fourth movement speed (V4) and a magnitude of the fifth movement speed (V5) is higher than a magnitude of the first movement speed (V1) and/or at least one of the fourth discharge rate and the fifth discharge rate is lower than the first discharge rate,
a length of the fourth section (U4) is different from a length of the second section (U2), and
a length of the fifth section (U5) is different from a length of the third section (U3).

9. The additive manufacturing method according to claim 8, further comprising:
a third passage forming step of placing a third passage forming object (3) in the n+2^{th} layer of the multiple vertically consecutive layers, such that the third passage forming object (3) overlaps with at least a part of the fourth segment (S4) and at least a part of the fifth segment (S5) in the vertical direction at the second vertically overlapping part (OP2), wherein
the third passage forming object (3) permits passage of the fluid and/or the rigid object in a direction intersecting the fifth segment (S5), the third passage forming object (3) has a second non-planar profile along at least a part of the fifth segment (S5) that is different from the first non-planar profile, and
the fourth movement speed (V4) and the fifth movement speed (V5) each correspond to the second non-planar profile of the third passage forming object (3) so as to complement a vertical height of the third passage forming object (3) at the second vertically overlapping part (OP2).

10. The additive manufacturing method according to any one of claims 1 to 9, wherein the first material is liquid curable concrete.

11. An additive manufacturing system for manufacturing a three-dimensional object from at least a first material according to a three-dimensional data model,
the additive manufacturing system comprising
a base for supporting the three-dimensional object thereon;
a nozzle for discharging the first material;
a moving mechanism configured to cause a relative movement between the base and the nozzle, such that the nozzle follows a target trajectory (T), while discharging a plurality of segments (S1 to S5) of the first material from the nozzle, thereby manufacturing the three-dimensional object in multiple vertically consecutive layers; and
a controller configured to control the moving mechanism, wherein
the controller is configured to execute the additive manufacturing method according to any one of claims 1 to 10.

12. A three-dimensional object obtained by executing the additive manufacturing method according to any one of claims 1 to 10.

## Patentansprüche

1. Additives Fertigungsverfahren zum Steuern eines additiven Fertigungssystems zum Herstellen eines dreidimensionalen Objekts aus einem härtbaren ersten Material gemäß einem dreidimensionalen Datenmodell,
wobei das additive Fertigungssystem Folgendes aufweist:
eine Basis zum Abstützen des dreidimensionalen Objekts darauf;
eine Düse zum Abgeben des ersten Materials; und
einen Bewegungsmechanismus, der konfiguriert ist, um eine Relativbewegung zwischen der Basis und der Düse zu bewirken, sodass die Düse einer Zieltrajektorie (T) folgt, während eine Vielzahl von Segmenten (S1 bis S5) des ersten Materials aus der Düse abgegeben werden, wodurch das dreidimensionale Objekt in mehreren vertikal aufeinanderfolgenden Lagen hergestellt wird,
wobei das Verfahren Folgendes aufweist:
einen ersten Abgabeschritt, bei dem die Düse durch den Bewegungsmechanismus mit einer ersten Bewegungsgeschwindigkeit (V1) in einem ersten Abschnitt (U1) der Zieltrajektorie (T) innerhalb einer n-ten Lage der mehreren vertikal aufeinanderfolgenden Lagen bewegt wird, während ein erstes Segment (S1) des ersten Materials mit einer ersten Abgaberate aus der Düse abgegeben wird;
einen zweiten Abgabeschritt, bei dem die Düse durch den Bewegungsmechanismus mit einer zweiten Bewegungsgeschwindigkeit (V2) in einem zweiten Abschnitt (U2) der Zieltrajektorie (T) innerhalb der n-ten Lage bewegt wird, wobei der zweite Abschnitt (U2) entlang der Zieltrajektorie (T) kontinuierlich mit dem ersten Abschnitt (U1) ist, während ein zweites Segment (S2) des ersten Materials mit einer zweiten Abgaberate aus der Düse abgegeben wird; und
einen dritten Abgabeschritt, bei dem die Düse durch den Bewegungsmechanismus mit einer dritten Bewegungsgeschwindigkeit (V3) in einem dritten Abschnitt (U3) der Zieltrajektorie (T) innerhalb einer n+1-ten Lage der mehreren vertikal aufeinanderfolgenden Lagen bewegt wird, während ein drittes Segment (S3) des ersten Materials mit einer dritten Abgaberate aus der Düse abgegeben wird, **dadurch gekennzeichnet, dass**
in dem ersten Abgabeschritt die erste Bewegungsgeschwindigkeit (V1) und/oder die erste Abgaberate so eingestellt werden, dass das erste Segment (S1) eine Höhe (h1) in einer vertikalen Richtung hat,
in dem dritten Abgabeschritt die Düse so bewegt wird, dass der dritte Abschnitt (U3) nahe an dem zweiten Abschnitt (U2) ist und ein vertikaler Abstand (d23) zwischen dem dritten Abschnitt (U3) und dem zweiten Abschnitt (U2) an einer ersten vertikal überlappenden Stelle (OP1) kleiner als die Höhe (h1) des ersten Segments (S1) ist, und
mindestens einer von einem Betrag der zweiten Bewegungsgeschwindigkeit (V2) und einem Betrag der dritten Bewegungsgeschwindigkeit (V3) größer als ein Betrag der ersten Bewegungsgeschwindigkeit (V1) ist und/oder mindestens eine von der zweiten Abgaberate und der dritten Abgaberate kleiner als die erste Abgaberate ist.

2. Additives Fertigungsverfahren nach Anspruch 1, wobei
jede von der ersten Abgaberate, der zweiten Abgaberate und der dritten Abgaberate größer als Null ist und
jeder von dem Betrag der ersten Bewegungsgeschwindigkeit (V1), dem Betrag der zweiten Bewegungsgeschwindigkeit (V2) und dem Betrag der dritten Bewegungsgeschwindigkeit (V3) größer als Null ist.

3. Additives Fertigungsverfahren nach Anspruch 1 oder 2, wobei
der zweite Abschnitt (U2) ein nicht-planarer Teil der Zieltrajektorie (T) ist, sodass die Düse in dem zweiten Abgabeschritt in einer horizontalen Richtung bewegt wird, während sie in der vertikalen Richtung bewegt wird, und
der dritte Abschnitt (U3) ein nicht-planarer Teil der Zieltrajektorie (T) ist, sodass die Düse in dem dritten Abgabeschritt in einer horizontalen Richtung bewegt wird, während sie in der vertikalen Richtung bewegt wird.

4. Additives Fertigungsverfahren nach Anspruch 3, wobei der zweite Abschnitt (U2) und der dritte Abschnitt (U3) jeweils eine Bogenform haben, eine Krümmung der Bogenform des zweiten Abschnitts (U2) unterschiedlich von einer Krümmung der Bogenform des dritten Abschnitts (U3) ist und eine Länge des zweiten Abschnitts (U2) unterschiedlich von einer Länge des dritten Abschnitts (U3) ist.

5. Additives Fertigungsverfahren nach Anspruch 3 oder 4, wobei
die Düse in einer n-1-ten Lage der mehreren vertikal aufeinanderfolgenden Lagen so bewegt wird, dass ein Betrag einer Bewegungsgeschwindigkeit an dem ersten vertikal überlappenden Teil (OP1) kleiner als der Betrag der zweiten Bewegungsgeschwindigkeit (V2) ist, und
der Betrag der zweiten Bewegungsgeschwindigkeit (V2) an dem ersten vertikal überlappenden Teil (OP1) kleiner als der Betrag der dritten Bewegungsgeschwindigkeit (V3) ist.

6. Additives Fertigungsverfahren nach einem der Ansprüche 1 bis 5, wobei
die Düse in dem zweiten Abgabeschritt entlang des zweiten Abschnitts (U2) mit einem nichtlinearen Geschwindigkeitsprofil bewegt wird, dessen Betrag von dem Betrag der ersten Bewegungsgeschwindigkeit (V1) zunimmt, um an dem ersten vertikal überlappenden Teil (OP1) den Betrag der zweiten Bewegungsgeschwindigkeit (V2) zu haben, und dann auf nichtlineare Weise zu dem Betrag der ersten Bewegungsgeschwindigkeit (V1) abnimmt,
die Düse in dem dritten Abgabeschritt entlang des dritten Abschnitts (U3) mit einem nichtlinearen Geschwindigkeitsprofil bewegt wird, dessen Betrag von dem Betrag der ersten Bewegungsgeschwindigkeit (V1) zunimmt, um an dem ersten vertikal überlappenden Teil (OP1) den Betrag der dritten Bewegungsgeschwindigkeit (V3) zu haben, und dann auf nichtlineare Weise zu dem Betrag der ersten Bewegungsgeschwindigkeit (V1) abnimmt, und
der Betrag der zweiten Bewegungsgeschwindigkeit (V2) unterschiedlich von dem Betrag der dritten Bewegungsgeschwindigkeit (V3) ist.

7. Additives Fertigungsverfahren nach einem der Ansprüche 1 bis 6, das ferner Folgendes aufweist:
einen zweiten Durchgangsausbildungsschritt, bei dem ein zweites Durchgangsausbildungsobjekt (2) in einer n+2-ten Lage der mehreren vertikal aufeinanderfolgenden Lagen platziert wird, sodass das zweite Durchgangsausbildungsobjekt (2) an dem ersten vertikal überlappenden Teil (OP1) in der vertikalen Richtung zumindest einen Teil des zweiten Segments (S2) und zumindest einen Teil des dritten Segments (S3) überlappt, wobei
das zweite Durchgangsausbildungsobjekt (2) einen Durchgang eines Fluids und/oder eines starren Objekts in einer Richtung ermöglicht, die das dritte Segment (S3) kreuzt,
das zweite Durchgangsausbildungsobjekt (2) entlang mindestens eines Teils des dritten Segments (S3) ein erstes nicht-planares Profil hat und
die zweite Bewegungsgeschwindigkeit (V2) und die dritte Bewegungsgeschwindigkeit (V3) jeweils dem ersten nicht-planaren Profil des zweiten Durchgangsausbildungsobjekts (2) entsprechen, um eine vertikale Höhe des zweiten Durchgangsausbildungsobjekts (2) an dem ersten vertikal überlappenden Teil (OP1) zu ergänzen.

8. Additives Fertigungsverfahren nach einem der Ansprüche 1 bis 7, das ferner Folgendes aufweist:
einen vierten Abgabeschritt, bei dem die Düse durch den Bewegungsmechanismus mit einer vierten Bewegungsgeschwindigkeit (V4) in einem vierten Abschnitt (U4) der Zieltrajektorie (T) innerhalb der n-ten Lage bewegt wird, während ein viertes Segment (S4) des ersten Materials mit einer vierten Abgaberate aus der Düse abgegeben wird; und
einen fünften Abgabeschritt, bei dem die Düse durch den Bewegungsmechanismus mit einer fünften Bewegungsgeschwindigkeit (V5) in einem fünften Abschnitt (U5) der Zieltrajektorie (T) innerhalb der n+1-ten Lage bewegt wird, während ein fünftes Segment (S5) des ersten Materials mit einer fünften Abgaberate aus der Düse abgegeben wird, wobei
die Düse in dem fünften Abgabeschritt so bewegt wird, dass der fünfte Abschnitt (U5) nahe an dem vierten Abschnitt (U4) ist und ein vertikaler Abstand (d45) zwischen dem vierten Abschnitt (U4) und dem fünften Abschnitt (U5) an einem zweiten vertikal überlappenden Teil (OP2) kleiner als die Höhe (h1) des ersten Segments (S1) ist,
mindestens einer von einem Betrag der vierten Bewegungsgeschwindigkeit (V4) und einem Betrag der fünften Bewegungsgeschwindigkeit (V5) größer als der Betrag der ersten Bewegungsgeschwindigkeit (V1) ist und/oder mindestens eine von der vierten Abgaberate und der fünften Abgaberate kleiner als die erste Abgaberate ist,
eine Länge des vierten Abschnitts (U4) unterschiedlich von einer Länge des zweiten Abschnitts (U2) ist und
eine Länge des fünften Abschnitts (U5) unterschiedlich von einer Länge des dritten Abschnitts (U3) ist.

9. Additives Fertigungsverfahren nach Anspruch 8, das ferner Folgendes aufweist:
einen dritten Durchgangsausbildungsschritt, bei dem ein drittes Durchgangsausbildungsobjekt (3) in der n+2-ten Lage der mehreren vertikal aufeinanderfolgenden Lagen platziert wird, sodass das dritte Durchgangsausbildungsobjekt (3) an dem zweiten vertikal überlappenden Teil (OP2) in der vertikalen Richtung zumindest einen Teil des vierten Segments (S4) und zumindest einen Teil des fünften Segments (S5) überlappt, wobei
das dritte Durchgangsausbildungsobjekt (3) einen Durchgang des Fluids und/oder des starren Objekts in einer Richtung ermöglicht, die das fünfte Segment (S5) kreuzt,
das dritte Durchgangsausbildungsobjekt (3) entlang mindestens eines Teils des fünften Segments (S5) ein zweites nicht-planares Profil hat, das unterschiedlich von dem ersten nicht-planaren Profil ist, und
die vierte Bewegungsgeschwindigkeit (V4) und die fünfte Bewegungsgeschwindigkeit (V5) jeweils dem zweiten nicht-planaren Profil des dritten Durchgangsausbildungsobjekts (3) entsprechen, um eine vertikale Höhe des dritten Durchgangsausbildungsobjekts (3) an dem zweiten vertikal überlappenden Teil (OP2) zu ergänzen.

10. Additives Fertigungsverfahren nach einem der Ansprüche 1 bis 9, wobei das erste Material flüssiger, härtbarer Beton ist.

11. Additives Fertigungssystem zum Herstellen eines dreidimensionalen Objekts aus mindestens einem ersten Material gemäß einem dreidimensionalen Datenmodell,
wobei das additive Fertigungssystem Folgendes aufweist:
eine Basis zum Abstützen des dreidimensionalen Objekts darauf;
eine Düse zum Abgeben des ersten Materials;
einen Bewegungsmechanismus, der konfiguriert ist, eine Relativbewegung zwischen der Basis und der Düse zu bewirken, sodass die Düse einer Zieltrajektorie (T) folgt, während eine Vielzahl von Segmenten (S1 bis S5) des ersten Materials aus der Düse abgegeben werden, wodurch das dreidimensionale Objekt in mehreren vertikal aufeinanderfolgenden Lagen hergestellt wird; und
eine Steuerungseinrichtung, die konfiguriert ist, den Bewegungsmechanismus zu steuern, wobei
die Steuerungseinrichtung konfiguriert ist, das additive Fertigungsverfahren nach einem der Ansprüche 1 bis 10 auszuführen.

12. Dreidimensionales Objekt, das durch Ausführen des additiven Fertigungsverfahrens nach einem der Ansprüche 1 bis 10 erhalten wird.

## Revendications

1. Procédé de fabrication additive pour commander un système de fabrication additive pour fabriquer un objet tridimensionnel à partir d'un premier matériau durcissable selon un modèle de données tridimensionnel,
le système de fabrication additive comprenant :
une base pour supporter l'objet tridimensionnel sur celle-ci ;
une buse pour éjecter le premier matériau ; et
un mécanisme de mise en mouvement configuré pour causer un mouvement relatif entre la base et la buse, de manière telle que la buse suit une trajectoire cible (T), tout en éjectant une pluralité de segments (S1 à S5) du premier matériau à partir de la buse, fabriquant ainsi l'objet tridimensionnel en de multiples couches verticalement consécutives,
le procédé comprenant :
une première étape d'éjection consistant à mettre en mouvement la buse, par le biais du mécanisme de mise en mouvement, avec une première vitesse de mouvement (V1) dans une première section (U1) de la trajectoire cible (T) à l'intérieur d'une n^{ième} couche des multiples couches verticalement consécutives, tout en éjectant un premier segment (S1) du premier matériau, avec un premier débit d'éjection, à partir de la buse ;
une deuxième étape d'éjection consistant à mettre en mouvement la buse, par le biais du mécanisme de mise en mouvement, avec une deuxième vitesse de mouvement (V2) dans une deuxième section (U2) de la trajectoire cible (T) à l'intérieur de la n^{ième} couche, dans lequel la deuxième section (U2) est continue à la première section (U1) le long de la trajectoire cible (T), tout en éjectant un deuxième segment (S2) du premier matériau, avec un deuxième débit d'éjection, à partir de la buse ; et
une troisième étape d'éjection consistant à mettre en mouvement la buse, par le biais du mécanisme de mise en mouvement, avec une troisième vitesse de mouvement (V3) dans une troisième section (U3) de la trajectoire cible (T) à l'intérieur d'une n+1^{ième} couche des multiples couches verticalement consécutives, tout en éjectant un troisième segment (S3) du premier matériau, avec un troisième débit d'éjection, à partir de la buse, **caractérisé en ce que**
dans la première étape d'éjection, la première vitesse de mouvement (V1) et/ou le premier débit d'éjection sont réglés de manière telle que le premier segment (S1) a une hauteur (h1) dans une direction verticale,
dans la troisième étape d'éjection, la buse est mise en mouvement de manière telle que la troisième section (U3) est proche de la deuxième section (U2) et une distance verticale (d23) entre la troisième section (U3) et la deuxième section (U2) au niveau d'une première partie verticalement en chevauchement (OP1) est inférieure à la hauteur (h1) du premier segment (S1), et
au moins une d'une amplitude de la deuxième vitesse de mouvement (V2) et d'une amplitude de la troisième vitesse de mouvement (V3) est plus haute qu'une amplitude de la première vitesse de mouvement (V1) et/ou au moins un du deuxième débit d'éjection et du troisième débit d'éjection est plus bas que le premier débit d'éjection.

2. Procédé de fabrication additive selon la revendication 1, dans lequel
chacun du premier débit d'éjection, du deuxième débit d'éjection, et du troisième débit d'éjection est supérieur à zéro, et
chacune de l'amplitude de la première vitesse de mouvement (V1), de l'amplitude de la deuxième vitesse de mouvement (V2), et de l'amplitude de la troisième vitesse de mouvement (V3) est supérieure à zéro.

3. Procédé de fabrication additive selon la revendication 1 ou 2, dans lequel
la deuxième section (U2) est une partie non plane de la trajectoire cible (T), de manière telle que, dans la deuxième étape d'éjection, la buse est mise en mouvement dans une direction horizontale tout en étant en mouvement dans la direction verticale, et
la troisième section (U3) est une partie non plane de la trajectoire cible (T), de manière telle que, dans la troisième étape d'éjection, la buse est mise en mouvement dans une direction horizontale tout en étant en mouvement dans la direction verticale.

4. Procédé de fabrication additive selon la revendication 3, dans lequel la deuxième section (U2) et la troisième section (U3) ont chacune une forme d'arc, une courbure de la forme d'arc de la deuxième section (U2) est différente d'une courbure de la forme d'arc de la troisième section (U3), et une longueur de la deuxième section (U2) est différente d'une longueur de la troisième section (U3).

5. Procédé de fabrication additive selon la revendication 3 ou 4, dans lequel,
dans une n-1^{ième} couche des multiples couches verticalement consécutives, la buse est mise en mouvement de manière telle qu'une amplitude d'une vitesse de mouvement au niveau de la première partie verticalement en chevauchement (OP1) est plus basse que l'amplitude de la deuxième vitesse de mouvement (V2), et
l'amplitude de la deuxième vitesse de mouvement (V2) au niveau de la première partie verticalement en chevauchement (OP1) est plus basse que l'amplitude de la troisième vitesse de mouvement (V3).

6. Procédé de fabrication additive selon l'une quelconque des revendications 1 à 5, dans lequel
dans la deuxième étape d'éjection, la buse est mise en mouvement le long de la deuxième section (U2) avec un profil de vitesse non linéaire, dont l'amplitude augmente depuis l'amplitude de la première vitesse de mouvement (V1) pour avoir l'amplitude de la deuxième vitesse de mouvement (V2) au niveau de la première partie verticalement en chevauchement (OP1) et puis diminue jusqu'à l'amplitude de la première vitesse de mouvement (V1) de manière non linéaire,
dans la troisième étape d'éjection, la buse est mise en mouvement le long de la troisième section (U3) avec un profil de vitesse non linéaire, dont l'amplitude augmente depuis l'amplitude de la première vitesse de mouvement (V1) pour avoir l'amplitude de la troisième vitesse de mouvement (V3) au niveau de la première partie verticalement en chevauchement (OP1) et puis diminue jusqu'à l'amplitude de la première vitesse de mouvement (V1) de manière non linéaire, et l'amplitude de la deuxième vitesse de mouvement (V2) est différente de l'amplitude de la troisième vitesse de mouvement (V3).

7. Procédé de fabrication additive selon l'une quelconque des revendications 1 à 6, comprenant en outre :
une deuxième étape de formation de passage consistant à mettre en place un deuxième objet de formation de passage (2) dans une n+2^{ième} couche des multiples couches verticalement consécutives, de manière telle que le deuxième objet de formation de passage (2) chevauche au moins une partie du deuxième segment (S2) et au moins une partie du troisième segment (S3) dans la direction verticale au niveau de la première partie verticalement en chevauchement (OP1), dans lequel
le deuxième objet de formation de passage (2) permet le passage d'un fluide et/ou d'un objet rigide dans une direction intersectant le troisième segment (S3), le deuxième objet de formation de passage (2) a un premier profil non plan le long d'au moins une partie du troisième segment (S3), et
la deuxième vitesse de mouvement (V2) et la troisième vitesse de mouvement (V3) correspondent chacune au premier profil non plan du deuxième objet de formation de passage (2) afin de compléter une hauteur verticale du deuxième objet de formation de passage (2) au niveau de la première partie verticalement en chevauchement (OP1).

8. Procédé de fabrication additive selon l'une quelconque des revendications 1 à 7, comprenant en outre :
une quatrième étape d'éjection consistant à mettre en mouvement la buse, par le biais du mécanisme de mise en mouvement, avec une quatrième vitesse de mouvement (V4) dans une quatrième section (U4) de la trajectoire cible (T) à l'intérieur de la n^{ième} couche, tout en éjectant un quatrième segment (S4) du premier matériau, avec un quatrième débit d'éjection, à partir de la buse ; et
une cinquième étape d'éjection consistant à mettre en mouvement la buse, par le biais du mécanisme de mise en mouvement, avec une cinquième vitesse de mouvement (V5) dans une cinquième section (U5) de la trajectoire cible (T) à l'intérieur de la n+1^{ième} couche, tout en éjectant un cinquième segment (S5) du premier matériau, avec un cinquième débit d'éjection, à partir de la buse, dans lequel
dans la cinquième étape d'éjection, la buse est mise en mouvement de manière telle que la cinquième section (U5) est proche de la quatrième section (U4) et une distance verticale (d45) entre la quatrième section (U4) et la cinquième section (U5) au niveau d'une seconde partie verticalement en chevauchement (OP2) est inférieure à la hauteur (h1) du premier segment (S1), au moins une d'une amplitude de la quatrième vitesse de mouvement (V4) et d'une amplitude de la cinquième vitesse de mouvement (V5) est plus haute qu'une amplitude de la première vitesse de mouvement (V1) et/ou au moins un du quatrième débit d'éjection et du cinquième débit d'éjection est plus bas que le premier débit d'éjection,
une longueur de la quatrième section (U4) est différente d'une longueur de la deuxième section (U2), et
une longueur de la cinquième section (U5) est différente d'une longueur de la troisième section (U3).

9. Procédé de fabrication additive selon la revendication 8, comprenant en outre :
une troisième étape de formation de passage consistant à mettre en place un troisième objet de formation de passage (3) dans la n+2^{ième} couche des multiples couches verticalement consécutives, de manière telle que le troisième objet de formation de passage (3) chevauche au moins une partie du quatrième segment (S4) et au moins une partie du cinquième segment (S5) dans la direction verticale au niveau de la seconde partie verticalement en chevauchement (OP2), dans lequel
le troisième objet de formation de passage (3) permet le passage du fluide et/ou de l'objet rigide dans une direction intersectant le cinquième segment (S5), le troisième objet de formation de passage (3) a un second profil non plan le long d'au moins une partie du cinquième segment (S5) qui est différent du premier profil non plan, et
la quatrième vitesse de mouvement (V4) et la cinquième vitesse de mouvement (V5) correspondent chacune au second profil non plan du troisième objet de formation de passage (3) afin de compléter une hauteur verticale du troisième objet de formation de passage (3) au niveau de la seconde partie verticalement en chevauchement (OP2).

10. Procédé de fabrication additive selon l'une quelconque des revendications 1 à 9, dans lequel le premier matériau est du béton durcissable liquide.

11. Système de fabrication additive pour fabriquer un objet tridimensionnel à partir d'au moins un premier matériau selon un modèle de données tridimensionnel,
le système de fabrication additive comprenant
une base pour supporter l'objet tridimensionnel sur celle-ci ;
une buse pour éjecter le premier matériau ;
un mécanisme de mise en mouvement configuré pour causer un mouvement relatif entre la base et la buse, de manière telle que la buse suit une trajectoire cible (T), tout en éjectant une pluralité de segments (S1 à S5) du premier matériau à partir de la buse, fabriquant ainsi l'objet tridimensionnel en de multiples couches verticalement consécutives ; et
une unité de commande configurée pour commander le mécanisme de mise en mouvement, dans lequel
l'unité de commande est configurée pour exécuter le procédé de fabrication additive selon l'une quelconque des revendications 1 à 10.

12. Objet tridimensionnel obtenu en exécutant le procédé de fabrication additive selon l'une quelconque des revendications 1 à 10.
